Europäisches Patentamt

European Patent Office

Office européen des brevets

(11) Veröffentlichungsnummer: **0 096 742**
A2

# (12) EUROPÄISCHE PATENTANMELDUNG

(21) Anmeldenummer: 83104330.2

(22) Anmeldetag: 03.05.83

(51) Int. Cl.³: **B 65 H 7/12**

(30) Priorität: 05.06.82 DE 3221379

(43) Veröffentlichungstag der Anmeldung: 28.12.83
Patentblatt 83/52

(84) Benannte Vertragsstaaten: **AT CH DE FR GB IT LI NL SE**

(71) Anmelder: **M.A.N.-ROLAND Druckmaschinen
Aktiengesellschaft, Christian-Pless-Strasse 6-30,
D-6050 Offenbach/Main (DE)**

(72) Erfinder: **Kistner, Werner, Kurhessen-Strasse 45,
D-6050 Offenbach/Main (DE)**

(74) Vertreter: **Marek, Joachim, Dipl.-Ing., c/o
M.A.N.-ROLAND Druckmaschinen A.G. Borsigstrasse 19,
D-6052 Mühlheim/Main (DE)**

(54) **Messvorrichtung für Bogendicken in der Transportbahn von Bögen bei Papierverarbeitungsmaschinen.**

㊶ Spulen (3) sind an einem Hebel (15) einer Meßvorrichtung (4) direkt oberhalb einer Auflage (7) angeordnet. Die Meßung der Bogendicke des Bogens (2) erfolgt direkt ohne störende Zwischenelemente. Die Auflage (7) ist aus metallischem Werkstoff, so daß ein Wirbelstrommeßverfahren durchführbar ist. Je dichter die Spule (3) an die Auflage (7) herankommt, desto größer sind die in die Auflage (7) induzierten Wirbelströme, die damit verbundenen Gegeninduktivität und die Resonanzfrequenz.

Meßvorrichtung für Bogendicken in der Transportbahn
von Bögen bei Papierverarbeitungsmaschinen

Die Erfindung betrifft eine Meßvorrichtung für Bogendicken in der Transportbahn von Bögen bei Papierverarbeitungsmaschinen, insbesondere bei papierverarbeitenden Druckmaschinen.

Es sind die unterschiedlichsten mechanischen Fühleinrichtungen zur Bestimmung der Bogendicke bei Papierverarbeitungsmaschinen bekannt geworden.

Eine Meßmethode verwendet die bewegte Bogenschicht als
Dielektrikum und mißt dieses elektronisch.

In der DE-OS 2 930 270 ist eine Kontrolleinrichtung für
die Zufuhr von Bogen bekannt geworden.

Aufgabe dieser Kontrolleinrichtung ist es, die Erkennungssicherheit für Doppelbögen zu steigern, insbesondere
bei dünnen Bögen sowie bei Bögen mit verformten Kanten
und bei Bögen die unterschiedliche Dicken aufweisen.

Aufgrund der räumlichen Anordnung und der begrenzten
Steifigkeit der Übertragungselemente können Relativbewegungen auftreten, welche die Meßwerte verfälschen
können.

Ausgehend von diesem Stand der Technik liegt der Erfindung die Aufgabe zugrunde, eine sichere, direkte
Bogendickenmessung zu erreichen, ohne störende mecha-

nische Zwischenelemente und deren Fehlerkomponenten.

Die Lösung der gestellten Aufgabe wird bei einer Meßvorrichtung der eingangs genannten Art erfindungsgemäß dadurch gelöst, daß die Lage einer Oberfläche
des Bogens mittels eines an die Oberfläche angedrückten Bogenabtaster die Lage einer Spule innerhalb der
Meßvorrichtung definiert und daß über die Spule mittels
eines Wirbelstromverfahrens die Lage einer Unterfläche
des Bogens gegenüber einer an der Papierverarbeitungsmaschine angeordneten metallischen Auflage des Bogens
erfaßbar ist.

Die Spulen liegen in besonders vorteilhafter Weise
direkt dicht über der metallischen Auflage der Bögen
und bilden einen Teil des Schwingkreises des Wirbelstromverfahrens.

Zur Messung der Bogendicke sind keine weiteren Elemente
dazwischen angeordnet. Durch Veränderung der Distanz
zwischen der oder den Spulen zur Auflage z.B. durch
verändern der Anzahl der übereinanderliegenden Bögen
verändern sich die induzierten Wirbelströme. Dies verändert die Gegeninduktivität was zu einer anderen
Resonanzfrequenz führt.

Dieser Meßvorgang ist direkt und Störungen aufgrund von
Bewegungen der Halterung des Meßsystems werden vermieden.
Die Messungen können kontinuierlich oder in Intervallen
über einen Maschinentakt erfolgen. Die Größe der Rolle,
die die Anlage der Meßvorrichtung auf den Papierbögen
erreicht, ist so gewählt, daß der Umfang ein ganzzahliges
Vielfaches der Strecke eines Maschinentaktes ist und die Auswerteeinheit das Meßsignal während eines oder mehrerer Abwicklungen der Rolle integriert. Der Wirbelstrom wird durch das Papier nicht beeinflußt. Um Folienmaterialien oder beliebige Materialien messen zu können, werden die Spulen außerhalb der Folienbahn angeordnet. Die Dicke der gemessenen Folien wird hierbei ebenfalls wie bei den Papierbögen über das Frequenzsignal gemessen.

Aufgrund der Genauigkeit des Meßverfahrens kann eine Unterscheidung getroffen werden, ob ein Bogen lediglich Lufteinschlüsse durch pneumatische Effekte zum unteren Bogen aufweist, oder ob ein Doppelbogen vorliegt, was zu erheblichen Störungen an der Druckmaschine führen könnte. Eine statische Aufladung der Bögen beeinträchtigt das Meßverfahren nicht.

Eine mögliche Unrundheit der Rolle bzw. des Bogenabtasters kann über die Auswerteeinheit kompensiert werden. In besonders vorteilhafter Weise entspricht der Umfang der Rolle dem ganzzahligen Vielfachen der Meßstrecke innerhalb eines Maschinentaktes.

Die elektronische Übertragung und Weiterverarbeitung des Frequenzsignals erfolgt mit digital arbeitenden elektronischen Schaltkreisen, wobei die Auswerteeinheit ein Teil davon bildet.

Die Fehl- und Doppelbogenüberwachung ist robust und einfach im Bedienungs- und Wartungsaufwand, Papierabrieb erfolgt nicht.

Weitere wesentliche Merkmale der Erfindung gehen aus den Unteransprüchen und der nachfolgenden Beschreibung in Verbindung mit den gezeigten Ausführungsbeispielen hervor.

Es zeigt:

Fig. 1    die Seitenansicht der Meßvorrichtung, bei der Spulen, Rolle und metallische Auflage in einer Ebene liegen,

Fig. 2    eine Draufsicht auf die Meßvorrichtung.

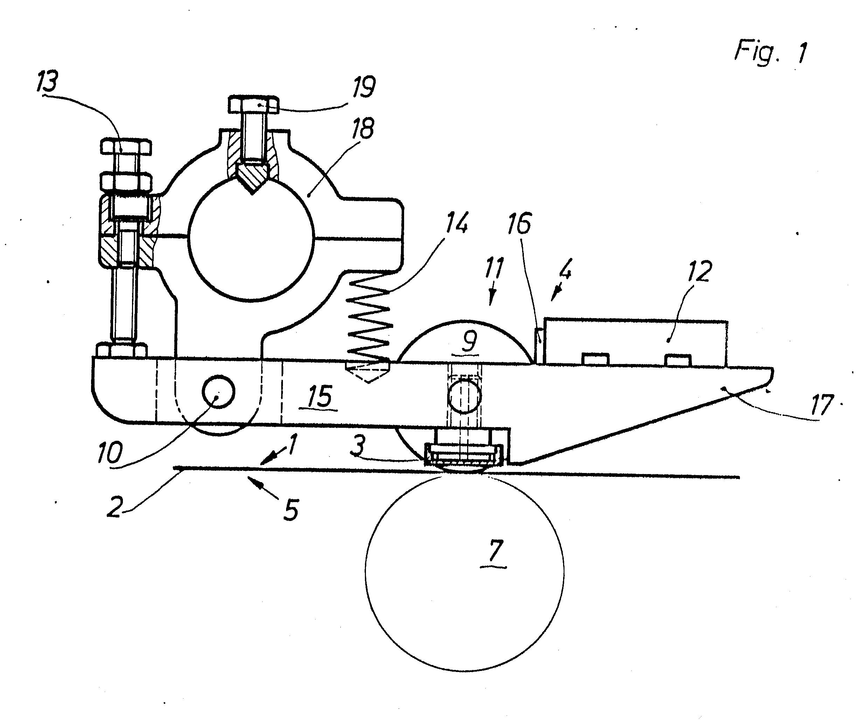

In Figur 1 ist eine Oberfläche 1 eines Bogens 2 dargestellt, wobei der Bogen 2 dicht unterhalb einer Spule 3 vorbeigleitet. Die Spule 3 bzw. mehrere sind an einer Meßvorrichtung 4 einer nicht näher dargestellten Papierverarbeitungsmaschine befestigt. Die Spule 3 ist oberhalb einer metallischen Auflage 7 angeordnet. Der Bogen 2 liegt mit seiner Unterfläche 5 auf der Auflage 7 auf.

Ein Bogenabtaster 9 gleitet oder rollt über die Oberfläche 1 des Bogens 2 bzw. der Bögen 2 und fixiert damit die Entfernung zwischen den Spulen 3 und der Auflage 7 entsprechend der Dicke der Bögen 2. Eine Feder 14 wirkt auf einen Hebel 15, so daß der Bogenabtaster 9 immer mit der gleichen Druckkraft auf dem Bogen 2 aufliegt. Der Hebel 15 der Meßvorrichtung 4 ist in einem Drehpunkt 10 drehbar gelagert und weist eine Abschrägung 17 an der Seite auf, von der die Bögen 2 in die Meßvorrichtung 4 hineingleiten. Eine elektronische Auswerteeinheit 12 ist oberhalb der Abschrägung 17 befestigt. Von der Auswerteeinheit 12 sind Verbindungen über eine Kabeldurchführungshülse 16 zu den Spulen 3 verlegt.

Die Meßvorrichtung 4 ist an einer Halterung 18 gehaltert.

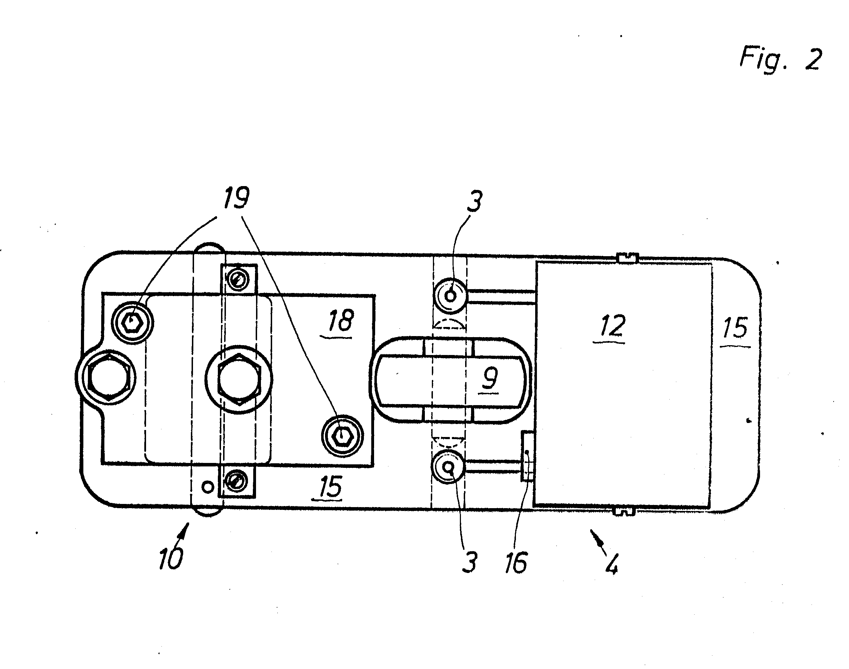

In der Fig. 2 ist die Meßvorrichtung 3 in der Draufsicht gezeigt, man erkennt hier die mittige Anordnung des Bogenabtasters 9 innerhalb des Hebels 15. Zu beiden Seiten des Bogenabtasters 9 sind in einer Ebene die Spulen 3 angeordnet. Die Spulen 3, der Bogenabtaster 9 und die Auflage 7 sind in einer Ebene zueinander angeordnet. Die Auswerteeinheit 12 erstreckt sich über den gesamten vorderen Bereich des Hebels 15.

Bezugszeichenliste

| | |
|---|---|
| 1 | Oberfläche |
| 2 | Bogen |
| 3 | Spule |
| 4 | Meßvorrichtung |
| 5 | Unterfläche |
| 6 | - |
| 7 | Auflage |
| 8 | Transporteinheit |
| 9 | Bogenabtaster |
| 10 | Drehpunkt |
| 11 | Rolle |
| 12 | Auswerteeinheit |
| 13 | Anschlagschraube |
| 14 | Feder |
| 15 | Hebel |
| 16 | Kabeldurchführungshülse |
| 17 | Abschrägung |
| 18 | Halterung |
| 19 | Befestigungsschraube |

M. A. N. - ROLAND Druckmaschinen Aktiengesellschaft
Christian-Pleß-Straße 6-30, 6050 Offenbach am Main

Meßvorrichtung für Bogendicken in der Transportbahn
von Bögen bei Papierverarbeitungsmaschinen

Patentansprüche

1.) Meßvorrichtung für Bogendicken in der Transportbahn von Bögen bei Papierverarbeitungsmaschinen,
insbesondere bei papierverarbeitenden Druckmaschinen,
d a d u r c h   g e k e n n z e i c h n e t ,
daß die Lage einer Oberfläche (1) des Bogens (2)
mittels eines an die Oberfläche (1) angedrückten
Bogenabtaster (9) die Lage einer Spule (3) innerhalb der Meßvorrichtung (4) definiert und daß
über die Spule (3) mittels eines Wirbelstromverfahrens die Lage einer Unterfläche (5) des Bogens
(2) gegenüber einer an der Papierverarbeitungsmaschine angeordneten metallischen Auflage (7)
des Bogens (2) erfaßbar ist.

2.) Meßvorrichtung nach Anspruch 1,
d a d u r c h   g e k e n n z e i c h n e t ,
daß die Meßvorrichtung (4) eine Funktionseinheit
mit in der Transportbahn notwendig vorhandenen
Transporteinheiten (8) ist.

- 2 -

3.) Meßvorrichtung nach Anspruch 1 und 2,
d a d u r c h   g e k e n n z e i c h n e t ,
daß die Spule (3) Teil eines Schwingkreises ist,
wobei der Abstand der Spule (3) zur metallischen
Auflage (7) über die Frequenz des Schwingkreises
abgefragt wird und die elektronische Übertragung
und Weiterverarbeitung des Frequenzsignals mit
digital arbeitenden elektronischen Schaltkreisen
erfolgt.

4.) Meßvorrichtung nach Anspruch 1 bis 3,
d a d u r c h   g e k e n n z e i c h n e t ,
daß innerhalb der Meßeinrichtung (4) die Spule (3)
und ein Bogenabtaster (9) starr zueinander angeordnet sind, wobei die Meßeinrichtung (4) um einen
Drehpunkt (10) beweglich gelagert ist.

5.) Meßvorrichtung nach Anspruch 1 und 4,
d a d u r c h   g e k e n n z e i c h n e t ,
daß der Bogenabtaster (9) eine Rolle (11) ist, und
die Auswerteeinheit (12) das Meßsignal während
genau einer oder mehrerer Abwicklungen der Rolle
(11) integriert.

6.) Meßvorrichtung nach Anspruch 1,
d a d u r c h   g e k e n n z e i c h n e t ,
daß der Bogenabtaster (9) an der Seitenkante des
Bogens (2) und die Spule (3) außerhalb des Bogens
(2) am Hebel (15) angeordnet sind.

7.) Meßvorrichtung nach mindestens einem der vorhergehenden Ansprüchen,
d a d u r c h   g e k e n n z e i c h n e t,
daß die Spulen (3) in einer Linie mit dem Bogenabtaster (9) innerhalb der Meßvorrichtung (4) angeordnet sind und daß die Linie parallel zur Stirnseite eines Bogens (2) angeordnet ist.

8.) Meßvorrichtung nach Anspruch 1 bis 7,
d a d u r c h   g e k e n n z e i c h n e t,
daß mehrere Bogenabtaster (9) und Spulen (3) am Hebel (15) angeordnet sind.

Fig. 1

0096742

Fig. 2

0096742